# EUROPEAN PATENT APPLICATION

(11) **EP 4 220 878 A1**
(43) Date of publication of application: **02.08.2023**
(21) Application number: 22154337.4
(22) Date of filing: 31.01.2022
(51) Int. Cl.: H02G 15/107, H02G 1/14, H02G 15/113, H02G 15/14, H02G 15/184, H01B 7/02, H02G 15/25, H02G 15/30, H01R 13/523, H01R 31/02

(54) **HVDC POWER CABLE MULTI-BRANCH JOINT ASSEMBLY**

(71) Applicant: NKT HV Cables AB, 371 60 Lyckeby (SE)
(72) Inventor: GUSTAFSSON, Kristian, Karlskrona (SE); HANSSON, Ola, Karlskrona (SE); KARATSIVOS, Evripidis, Karlskrona (SE); ANTONISCHKI, Jörn, Fågelmara (SE)
(74) Representative: Kransell & Wennborg KB

(57) **Abstract**

An HVDC power cable joint assembly (7) for jointing more than two power cables (9), comprising: a connection body comprising: a multi-branch conductor having at least two branches and a stem, a multi-branch conductor insulation system comprising: a connection body inner semiconducting layer arranged radially outside of the multi-branch conductor, a connection body insulation layer arranged radially outside the connection body inner semiconducting layer, a connection body outer semiconducting layer arranged radially outside the connection body insulation layer, N power cables (9), where N is the number of branches plus one, each power cable (9) having a conductor (9a), and a power cable insulation system surrounding the conductor (9a), N power cable joints (11), each connecting a branch or the stem (3c) to a respective power cable (9), wherein each power cable joint (11) comprises: a conductor joint (11a) between one of the branches, or the stem, and a conductor (9a) of one of the power cables (9a), a joint insulation system arranged around the conductor joint (11a), the joint insulation system comprising a deflector layer (11c), a field grading layer (11d), a joint insulation layer (11e) and a joint insulation system outer semiconducting layer (11f), and an outer cover housing (ng) the joint insulation system, and an external metal casing (13) accommodating the connection body.

## Description

### TECHNICAL FIELD

The present disclosure generally relates to HVDC power cables.

### BACKGROUND

It is often necessary to provide a power cable with one or more joints in case the power cable is laid over a long distance. Traditionally, joints connect two cable lengths.

When more than two cables lengths are to be connected, the connection is typically made at a substation, where each cable is terminated and connected to a busbar. This type of connection however requires the presence of a substation and has a large footprint.

There are examples of joints structures that allow for jointing of more than two cable lengths, as for example disclosed in JPS6435885 A, US2019164666, DE1105942, and US4615115.

### SUMMARY

A general object of the present disclosure is to provide a HVDC power cable joint assembly that solves or at least mitigates the problems of the prior art.

There is hence according to a first aspect of the present disclosure provided an HVDC power cable joint assembly for jointing more than two power cables, comprising: a connection body comprising: a multi-branch conductor having at least two branches and a stem, a multi-branch conductor insulation system comprising: a connection body inner semiconducting layer arranged radially outside of the multi-branch conductor, a connection body insulation layer arranged radially outside the connection body inner semiconducting layer, a connection body outer semiconducting layer arranged radially outside the connection body insulation layer, N power cables, where N is the number of branches plus one, each power cable having a conductor, and a power cable insulation system surrounding the conductor, N power cable joints, each connecting a branch or the stem to a respective power cable, wherein each power cable joint comprises: a conductor joint between one of the branches, or the stem, and a conductor of one of the power cables, a joint insulation system arranged around the conductor joint, the joint insulation system comprising a deflector layer, a field grading layer, a joint insulation layer and a joint insulation system outer semiconducting layer, and an outer cover housing the joint insulation system, and an external metal casing accommodating the connection body.

The HVDC power cable joint assembly provides a compact way to collect incoming power from several HVDC power cables for further transmission via the power cable connected to the stem, or vice versa.

Further, in one application, a submarine power cable may be connected to the stem and land power cables may be connected to the branches. The land power cables will in this case be arranged at a distance from each other due to the structure of the connection body, so that hot spots may be avoided.

In case the HVDC power cable joint assembly comprises only two branches, the multi-branch conductor may have the shape of a T or a Y.

Beneficially, a T-shaped multi-branch conductor may be used if the jointing is taking place offshore and the power cables are connected to either side of the top of the T, as power cables are usually arranged in parallel in the jointing house onboard a marine vessel.

Each power cable is an HVDC power cable.

The HVDC power cable joint assembly may be a submarine HVDC power cable joint assembly.

Each power cable may be a submarine power cable.

Alternatively, at least one power cable may be a submarine power cable and at least one of the power cables may be a land power cable.

The joint insulation system may be configured to bridge a gap between the multi-branch conductor insulation system covering the branch or the stem and the power cable insulation system of the power cable in question.

According to one embodiment the external metal casing comprises steel such as stainless steel. The stainless steel may for example be stainless steel 316L.

The external metal casing may according to one example comprise copper or aluminium.

Each outer cover may for example comprise one of a shrink tube and a moulded structure. The moulded structure may for example comprise a resin such as an epoxy resin.

According to one embodiment the external metal casing accommodates the power cable joints.

In some examples, the joint insulation systems are integrated with the multi-branch conductor insulation system.

The connection body insulation layer may be a polymeric insulation layer. The connection body insulation layer may for example comprise cross-linked polyethylene (XLPE), ethylene propylene diene monomer (EPDM) rubber, ethylene propylene rubber (EPR), or polypropylene.

Each power cable insulation system may be an extruded insulation system. The insulation power cable insulation system may comprise an insulation layer comprising XLPE, ethylene propylene diene monomer (EPDM) rubber, ethylene propylene rubber (EPR), or polypropylene.

The deflector layer may be electrically connected to the conductor joint. Each power cable joint may for example comprise one or more resilient members such as springs, a metal sleeve, conducting rubber, or polymeric tape, providing electrical contact between the deflector layer and the conductor joint.

Each power cable joint may for example comprise a ferrule or sleeve which connects the stem or branch with a conductor of a power cable. Alternatively, the conductor may be welded to the stem or branch.

According to one embodiment each power cable comprises a metallic water barrier arranged radially outside the power cable insulation system, wherein the metallic water barrier of each power cable is thermally joined circumferentially to the external metal casing.

The metallic water barriers are thus sealed against the external metal casing.

Each metallic water barrier may for example comprise stainless steel, copper, or aluminium.

According to one embodiment the thermal joining is by welding or soldering.

According to one embodiment the thermal joining is provided directly between the metallic water barrier and the external metal casing, or wherein the HVDC power cable joint assembly comprises a connection sleeve and the thermal joining is provided indirectly by means of the connection sleeve arranged between the metallic water barrier and the external metal casing.

The connection sleeve may form an interface to facilitate the welding or soldering, especially if the metallic water barrier and the external metal casing are made of different metals.

The connection sleeve may comprise the same material as the metallic water barrier.

The connection sleeve may comprise nickel in case the metallic water barrier comprises copper.

According to one embodiment the metallic water barrier comprises copper, a copper alloy, aluminium, or stainless steel.

Each metallic water barrier may for example be longitudinally welded along the length of the corresponding power cable or it may be bonded by means of an adhesive.

According to one embodiment the joint insulation system is a prefabricated joint insulation system.

According to one embodiment the deflector layer is arranged between the conductor joint and the field grading layer, and wherein the joint insulation layer is arranged radially outside the field grading layer, and the joint insulation system outer semiconducting layer is arranged radially outside the joint insulation layer.

There is according to a second aspect provided a method of jointing more than two power cables using the HVDC power cable joint assembly of the first aspect, the method comprising: a) making the N power cable joints, wherein the making involves: jointing each branch and the stem of the multi-branch conductor with a conductor of a respective one of the N power cables to obtain the conductor joints, each conductor joint being covered by a respective joint insulation system, and b) providing the external metal casing around the connection body.

According to one embodiment step b) involves providing the external metal casing around all the power cable joints.

One embodiment comprises providing the multi-branch conductor for which an end portion of each branch and the stem is an exposed conductor section, wherein for each branch and the stem the connection body inner semiconducting layer and the connection body insulation layer extends axially beyond the connection body outer semiconducting layer towards an end face of the exposed conductor section, wherein step a) involves jointing each exposed conductor section with the conductor of a respective one of the N power cables to obtain the conductor joints.

According to one embodiment the step of providing the multi-branch conductor involves exposing an end portion of each branch and the stem of the multi-branch conductor to obtain the exposed conductor sections by removing a first portion of the connection body inner semiconducting layer and the connection body insulation layer, and a second portion of the connection body outer semiconducting layer.

According to one embodiment each power cable comprises a metallic water barrier arranged radially outside the power cable insulation system, wherein the method comprises thermally joining the metallic water barrier of each power cable circumferentially to the external metal casing.

According to one embodiment the thermal joining is performed by welding or soldering.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a longitudinal section of an example of a connection body of an HVDC power cable joint assembly;
Fig. 2 schematically shows a longitudinal section of an example of an HVDC power cable joint assembly comprising the connection body of Fig. 1;
Fig. 3 shows another example of a connection body integrated with a joint insulation system; and
Fig. 4 is a flowchart of a method of jointing more than two power cables.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

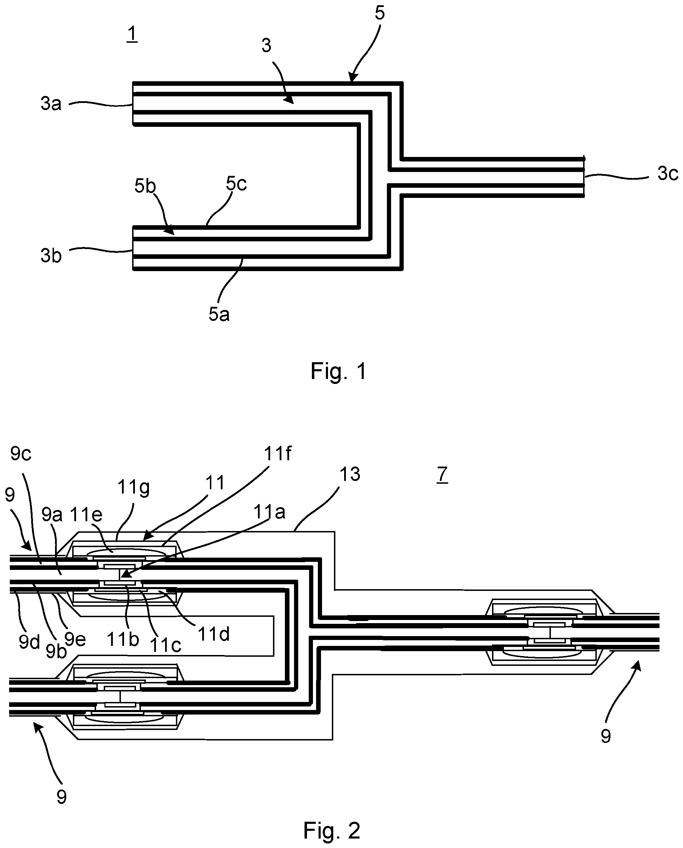

Fig. 1 shows an example of a connection body 1 for an HVDC power cable joint assembly.

The connection body 1 comprising at least two branches and a stem.

The connection body 1 comprises a multi-branch conductor 3 having at least two branches 3a, 3b and a stem 3c.

All the current passing through the multi-branch conductor 3 passes through the stem 3c.

The current passing through the stem 3c is distributed to the branches 3a, 3b or is collected from the branches 3a, 3b, depending on the current flow direction.

The branches 3a, 3b and the stem 3c are electrically and mechanically connected.

The connection body 1 may for example have the shape of a Y or a T if the multi-branch conductor 3 comprises only two branches as in the example in Fig. 1.

The multi-branch conductor 3 may for example comprise copper or aluminium.

According to one example, different branches may comprise different metal material. For example, one branch may comprise copper and another branch may comprise aluminium, or all branches may comprise the same metal material and the stem may comprise another metal material. The branches may for example comprise aluminium and the stem may comprise copper or vice versa.

The connection body 1 comprises a multi-branch insulation system 5.

The multi-branch insulation system 5 may be a moulded insulation system.

The multi-branch insulation system 5 comprises a connection body inner semiconducting layer 5a arranged radially outside the multi-branch conductor.

The connection body inner semiconducting layer 5a may comprise a polymeric material containing conductive material such as carbon black.

The multi-branch insulation system 5 comprises a connection body insulation layer 5b arranged radially outside the connection body inner semiconducting layer 5a.

The connection body insulation layer 5b may for example comprise a polymeric material such as XLPE, EDPM, EPR or polypropylene.

The multi-branch insulation system 5 comprises a connection body outer semiconducting layer 5c arranged radially outside the connection body insulation layer 5b.

The connection body outer semiconducting layer 5c may comprise a polymeric material containing conductive material such as carbon black.

Fig. 2 shows an example of an HVDC power cable joint assembly 7. The HVDC power cable joint assembly 7 comprises the connection body 1.

The HVDC power cable joint assembly 7 is designed for jointing more than two HVDC power cables.

The HVDC power cable joint assembly 7 comprises N power cables 9, where N is an integer equal to the sum of the number of branches 3a, 3b and the stem 3c.

In the present example N is three but N could according to some examples be more than three, such as four, five, six, seven, eight, nine, ten, or any number above ten.

Each power cable 9 comprises a conductor 9a. The conductor 9a may for example comprise copper or aluminium.

Each power cable 9 comprises a power cable insulation system arranged around the conductor 9a, including an inner semiconducting layer 9b, an insulation layer 9c arranged around the inner semiconducting layer 9b, and an outer semiconducting layer 9d arranged around the insulation layer 9c.

The insulation layer 9c may for example comprise XLPE, EPDM rubber, EPR, or polypropylene.

Each power cable 9 is connected to a respective branch or the stem of the connection body 1.

The HVDC power cable joint assembly 7 comprises N power cable joints 11. Each power cable joint 11 connects a branch 3a, 3b or the stem 3c of the multi-branch conductor 3 to a respective power cable 9.

Each power cable joint 11 comprises a conductor joint 11a between a branch 3a, 3b or the stem 3c of the multi-branch conductor 3 and the conductor 9a of one of the power cables 9.

The power cable joint 11 may comprise a ferrule or sleeve 11b arranged to mechanically connect the conductor 9a with a branch 3a, 3b or stem 3c. The conductor joint 11a may alternatively be made by welding.

Each power cable joint 11 comprises a joint insulation system arranged around the conductor joint 11a.

The joint insulation system may for example be a prefabricated joint insulation system in the form of a multi-layered elastomeric sleeve that is slid onto the conductor joint 11a after the conductor joint 11a has been made, as shown in Fig. 2.

The joint insulation system comprises a deflector layer 11c arranged around the conductor joint 11a. The deflector layer 11c comprises an electrically conducting material.

The joint insulation system comprises a field grading layer 11d arranged radially outside the deflector layer 11c. The field grading layer 11d may comprise a rubber material comprising a filler material to provide the field grading property. The field grading layer 11d has a lower electric conductivity than the semiconducting layers of the multi-branch conductor insulation system 5.

The joint insulation system comprises a joint insulation layer 11e arranged radially around at least a portion of the axial length of the field-grading layer 11d. The joint insulation layer 11e may for example comprise a polymeric material such as XLPE, EPDM, EPR or polypropylene.

The joint insulation system comprises a joint insulation system outer semiconducting layer 11f arranged radially outside the joint insulation layer 11e The joint insulation system outer semiconducting layer 11f connects the connection body outer semiconducting layer 5c with the outer semiconducting layer 9d of the power cable 9 that is jointed by the power cable joint 11.

The joint insulation system bridges the gap between the power cable insulation system and the multi-branch conductor insulation system 5.

The power cable joint 1 comprises an outer cover 11g housing the joint insulation system. The outer cover 11f may for example be formed by a shrink tube or it may be moulded.

The HVDC power cable joint assembly 7 comprises an external metal casing 13 accommodating the connection body 1. The metal of the external metal casing 13 may for example comprise or consist of stainless steel, copper or aluminium.

The external metal casing 13 comprises N openings in which a respective power cable 9 is inserted into the external metal casing 13.

The power cable joint 11 is arranged inside the external metal casing 13.

Each power cable 9 may comprise a metallic water barrier 9e arranged radially outside the power cable insulation system.

The metallic water barrier 9e may for example comprise or consist of copper, a copper alloy, aluminium, stainless steel, or lead.

The metallic water barrier 9e extends at least up to the external metal casing 13.

The metallic water barrier 9e of each power cable 9 is thermally joined circumferentially to the external metal casing 13. The thermal joining is made along the entire circumference of the power cable 9.

The thermal joining is made by welding or soldering.

The thermal joining maybe provided directly between the metallic water barrier 9e and the external metal casing 13. Alternatively, the HVDC power cable joint assembly may comprise a connection sleeve and the thermal joining is in this case provided indirectly by means of the connection sleeve arranged between the metallic water barrier and the external metal casing.

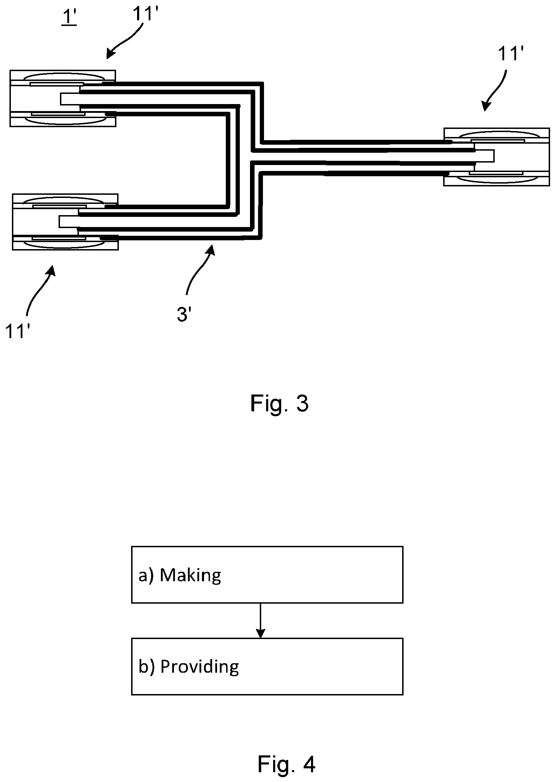

Fig. 3 shows a variation of the HVDC power cable joint assembly. The HVDC power cable joint assembly 1' is similar to the HVDC power cable joint assembly 1, except that the joint insulation systems 11' are integrated with the connection body 3'. The connection body 1' integrated with the joint insulation systems 11' is thus prefabricated in this example.

Fig. 4 is a flowchart of methods of jointing more than two power cables 9 using the HVDC power cable joint assembly 1, 1'.

In a step a) N power cable joints are made. Step a) involves jointing each branch 3a, 3b and the stem 3c of the multi-branch conductor 3 with a conductor 9a of a respective one of the N power cables 9 to obtain the conductor joints 11.

An end portion of each branch 3a, 3b and the stem 3c is an exposed conductor section before the conductor joint 11a is made. The exposed conductor sections may either have been constructed in this way in the factory, for example in a moulding process, or the multi-branch conductor insulation system 5 may be peeled off before the conductor joint 11a is made to obtain the exposed conductor sections.

The exposed conductor sections may according to one variation be obtained by removing a first portion of the connection body inner semiconducting layer 5a and the connection body insulation layer 5b, and a second portion, longer than the first portion, of the connection body outer semiconducting layer 5c on each branch and stem of the connection body 1.

The connection body inner semiconducting layer 5a and the connection body insulation layer 5b extends axially beyond the connection body outer semiconducting layer 5c towards an end face of the exposed conductor sections. There is thus a portion of the multi-branch conductor insulation system 5 where for each branch 3a, 3b and stem 3c, the connection body insulation layer 5b is the outermost layer of the multi-branch conductor insulation system 5. For each branch 3a, 3b and the step 3c, the connection body inner semiconducting layer 5a and the connection body insulation layer 5b terminate at the same or essentially same axial location, which is where the exposed conductor section begins.

In the example of Figs 1-2, where the joint insulation systems 11 are prefabricated sleeves, each conductor joint 11a is covered by a respective joint insulation system 11 that is slid onto the conductor joint 11a.

If the joint insulation systems 11 are integrated with the connection body 1, the jointing involves making the conductor joints 11a. In this case, the conductor 9a is moved into the joint insulation system 11 and connected with the branch or stem of the multi-branch conductor for example using biasing spring elements to maintain the mechanical connection. The conductor 9a and the branch or stem may in this case be mated with each other and have a male-female structure, with either the conductor 9a or the stem/branch having a male structure and the other having a female structure.

Next, the joint insulation systems 11 are covered by the outer cover 11g. The outer cover 11f may for example be a heat shrink tube or a cold shrink tube placed over the joint insulation system 11. Alternatively, the outer cover 11g may be moulded onto the joint insulation system 11.

Before the outer cover 11f is arranged around the joint insulation system 11, a metal mesh may be placed over the joint insulation system outer semiconducting layer 11e overlappingly with the connection body outer semiconducting layer 5c and the outer semiconducting layer 9d of the power cable 9 that is jointed by the power cable joint 11 to ensure an electric connection between these components. The metal mesh may for example be made of copper.

When the power cable joints 11 have been made, the external metal casing 13 is provided around the connection body 1 in step b). The external metal casing 13 typically also covers the power cable joints 11.

After the external metal casing 13 has been placed around the connection body 1 and the power cable joints 11, the metallic water barrier 9e of each power cable 9 may be thermally joined along its entire circumference with the external metal casing 13 to make the external metal casing water-tight. The thermal joining may be performed by welding or soldering.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. An HVDC power cable joint assembly (7) for jointing more than two power cables (9), comprising:
- a connection body (1) comprising:
a multi-branch conductor (3) having at least two branches (3a, 3b) and a stem (3c),
a multi-branch conductor insulation system (5) comprising:
a connection body inner semiconducting layer (5a) arranged radially outside of the multi-branch conductor (3),
a connection body insulation layer (5b) arranged radially outside the connection body inner semiconducting layer (5a),
a connection body outer semiconducting layer (5c) arranged radially outside the connection body insulation layer (5b),
- N power cables (9), where N is the number of branches (3a, 3b) plus one, each power cable (9) having a conductor (9a), and a power cable insulation system surrounding the conductor (9a),
- N power cable joints (11), each connecting a branch (3a, 3b) or the stem (3c) to a respective power cable (9),
wherein each power cable joint (11) comprises:
a conductor joint (11a) between one of the branches (3a, 3b), or the stem (3c), and a conductor (9a) of one of the power cables (9a),
a joint insulation system arranged around the conductor joint (11a),
the joint insulation system comprising a deflector layer (11c), a field grading layer (11d), a joint insulation layer (11e) and a joint insulation system outer semiconducting layer (11f), and
an outer cover housing (11g) the joint insulation system, and
- an external metal casing (13) accommodating the connection body (1).

2. The HVDC power cable joint assembly (7) as claimed in claim 1, wherein the external metal casing comprises steel such as stainless steel.

3. The HVDC power cable joint assembly (7) as claimed in claim 1 or 2, wherein the external metal casing (13) accommodates the power cable joints (11).

4. The HVDC power cable joint assembly (7) as claimed in any of the preceding claims, wherein each power cable (9) comprises a metallic water barrier (9e) arranged radially outside the power cable insulation system, wherein the metallic water barrier (9) of each power cable is thermally joined circumferentially to the external metal casing (13).

5. The HVDC power cable joint assembly (7) as claimed in claim 4, wherein the thermal joining is by welding or soldering.

6. The HVDC power cable joint assembly (7) as claimed in claim 4 or 5, wherein the thermal joining is provided directly between the metallic water barrier (9e) and the external metal casing (13), or wherein the HVDC power cable joint assembly comprises a connection sleeve and the thermal joining is provided indirectly by means of the connection sleeve arranged between the metallic water barrier and the external metal casing.

7. The HVDC power cable joint assembly (7) as claimed in any of claims 4-6, wherein the metallic water barrier (9) comprises copper, a copper alloy, aluminium, or stainless steel.

8. The HVDC power cable joint assembly (7) as claimed in any of the preceding claims, wherein the joint insulation system is a prefabricated joint insulation system.

9. The HVDC power cable joint assembly (7) as claimed in any of the preceding claims, wherein the deflector layer (11e) is arranged between the conductor joint (11a) and the field grading layer (11d), and wherein the joint insulation layer (11e) is arranged radially outside the field grading layer (11d), and the joint insulation system outer semiconducting layer (11f) is arranged radially outside the joint insulation layer (11e).

10. A method of jointing more than two power cables (9) using the HVDC power cable joint assembly (7) of any of the preceding claims, the method comprising:
a) making the N power cable joints (11), wherein the making involves:
jointing each branch (3a, 3b) and the stem (3c) of the multi-branch conductor (3) with a conductor (9a) of a respective one of the N power cables (9) to obtain the conductor joints (11a),
each conductor joint (11a) being covered by a respective joint insulation system, and
b) providing the external metal casing (13) around the connection body (1).

11. The method as claimed in claim 10, wherein step b) involves providing the external metal casing (13) around all the power cable joints (11).

12. The method as claimed in claim 11 or 12, comprising: providing the multi-branch conductor (3) for which an end portion of each branch and the stem is an exposed conductor section, wherein for each branch (3a, 3b) and the stem (3c) the connection body inner semiconducting layer (5a) and the connection body insulation layer (5b) extends axially beyond the connection body outer semiconducting layer (5c) towards an end face of the exposed conductor section, wherein step a) involves jointing each exposed conductor section with the conductor (9a) of a respective one of the N power cables (9) to obtain the conductor joints (11).

13. The method as claimed in claim 12, wherein the step of providing the multi-branch conductor (3) involves exposing an end portion of each branch (3a, 3b) and the stem (3c) of the multi-branch conductor (3) to obtain the exposed conductor sections by removing a first portion of the connection body inner semiconducting layer (5a) and the connection body insulation layer (5b), and a second portion of the connection body outer semiconducting layer (5c).

14. The method as claimed in any of claims 10-13, wherein each power cable comprises a metallic water barrier (9e) arranged radially outside the power cable insulation system, wherein the method comprises thermally joining the metallic water barrier (9e) of each power cable (9) circumferentially to the external metal casing (13).

15. The method as claimed in claim 13, wherein the thermal joining is performed by welding or soldering.
